# EUROPEAN PATENT APPLICATION

(11) **EP 4 691 709 A1**
(43) Date of publication of application: **11.02.2026**
(21) Application number: 23932153.2
(22) Date of filing: 06.12.2023
(51) Int. Cl.: B25J 15/06

(54) **GRIPPER**

(30) Priority: 07.04.2023 JP 2023062822
(71) Applicant: SMC Corporation, Tokyo 104-0031 (JP)
(72) Inventor: SAKA Hiroaki, Tsukubamirai-shi, Ibaraki 300-2493 (JP)
(74) Representative: Keil & Schaafhausen Patentanwälte PartGmbB
(86) International application number: PCT/JP2023/043707
(87) International publication number: WO 2024/209744

(57) **Abstract**

The present invention relates to a gripper (10) comprising: a cylindrical pad (14) that picks up a workpiece (54, 56, 58) by suction; and a gripper body (12) to which the pad (14) is attached, and which generates a negative pressure within the pad (14) by jetting a compressed fluid along a pad inner peripheral surface (46a) of the pad (14). The pad (14) has at least one cut-out part (50) formed by cutting out the pad (14) in a gripper surface (48) facing the workpiece (54, 56, 58).

## Description

### TECHNICAL FIELD

The present invention relates to a gripper for holding a workpiece by negative pressure suction.

### BACKGROUND ART

For example, a negative pressure suction gripper is utilized for gripping and carrying a thin and soft sheet-shaped workpiece such as a piece of paper, a fabric, a vinyl sheet, and a resin film.

Such a workpiece may be provided in a manner stacked on a plurality of the same type of workpieces. In this case, when the uppermost workpiece among the stacked workpieces is gripped by the gripper, a plurality of other workpieces may also be taken out.

An example of a workpiece that is likely to stick to other ones of the same type of workpieces is a glassine cup formed by molding glassine paper into a cup shape. JP 2004-217252 A discloses a technique in which, when the bottom surface of a target glassine cup is being gripped by a gripper, the peripheral edge portion of the target glassine cup is sucked by another suction head, and the target glassine cup is peeled off from the second and subsequent layers of glassine cups so as to take out a glassine cup one by one.

### SUMMARY OF THE INVENTION

However, such a conventional gripper requires not only a mechanism for sucking a workpiece but also a mechanism for peeling off the workpiece, and thus the device configuration becomes complicated disadvantageously.

The present invention has the object of solving the aforementioned problem.

One aspect of the following disclosure is characterized by a gripper configured to suck a workpiece by a negative pressure, including a pad having a tubular shape and configured to pick the workpiece up, and a gripper main body to which the pad is attached, the gripper main body being configured to generate the negative pressure inside the pad by jetting a compressed fluid along an inner circumferential surface of the pad, wherein the pad includes one or more cutout portions formed by cutting the pad at a gripper surface facing the workpiece.

The gripper of the above aspect can grip the stacked sheet-shaped workpieces one by one with a simple device configuration.

### BRIEF DESCRIPTION OF THE DRAWINGS

[FIG. 1] FIG. 1A is a cross-sectional view of a gripper according to a first embodiment; and FIG. 1B is a cross-sectional view taken along line IB-IB of FIG. 1A;
[FIG. 2] FIG. 2A is a side view of the gripper shown in FIG. 1A; and FIG. 2B is a perspective view of the gripper shown in FIG. 1A as viewed from a distal end side;
[FIG. 3] FIG. 3 is an exploded perspective view of the gripper shown in FIG. 1A;
[FIG. 4] FIG. 4 is an explanatory view of an operation of gripping a sheet-shaped workpiece by the gripper shown in FIG. 1A;
[FIG. 5] FIG. 5A is an explanatory view of an operation of gripping, by the gripper shown in FIG. 1A, a glassine cup (cup-shaped workpiece); and FIG. 5B is a cross-sectional view taken along line VB-VB of FIG. 5A;
[FIG. 6] FIG. 6A is an explanatory view of an operation of gripping, by the gripper in FIG. 1A, a spherical workpiece placed on a tray; and FIG. 6B is a perspective view of the gripper and the spherical workpiece that are shown in FIG. 6A;
[FIG. 7] FIG. 7A is a cross-sectional view taken along line VIIA-VIIA of FIG. 6B; and FIG. 7B is a perspective view of a glassine cup and a spherical workpiece disposed by the gripper shown in FIG. 1A;
[FIG. 8] FIG. 8A is a perspective view of a pad according to Modified Embodiment 1 of the First Embodiment; and FIG. 8B is a perspective view of a pad according to Modified Embodiment 2 of the First Embodiment;
[FIG. 9] FIG. 9A is a perspective view of a pad according to Modified Embodiment 3 of the First Embodiment; and FIG. 9B is a cross-sectional view taken along line IXB-IXB of FIG. 9A;
[FIG. 10] FIG. 10A is a perspective view of a pad according to Modified Embodiment 4 of the First Embodiment; and FIG. 10B is a perspective view of a pad according to Modified Embodiment 5 of the First Embodiment;
[FIG. 11] FIG. 11A is a perspective view of a pad according to Modified Embodiment 6 of the First Embodiment; and FIG. 11B is a perspective view of a pad according to Modified Embodiment 7 of the First Embodiment;
[FIG. 12] FIG. 12A is a side view of a pad according to Modified Embodiment 8 of the First Embodiment; FIG. 12B is a side view of a pad according to Modified Embodiment 9 of the First Embodiment; and FIG. 12C is a side view of a pad according to Modified Embodiment 10 of the First Embodiment;
[FIG. 13] FIG. 13A is a perspective view of a pad according to Modified Embodiment 11 of the First Embodiment; and FIG. 13B is a cross-sectional view of a state in which a spherical workpiece is gripped by a gripper to which the pad shown in FIG. 13A is attached;
[FIG. 14] FIG. 14A is a cross-sectional view of a gripper according to the Second Embodiment; and FIG. 14B is an exploded perspective view of the gripper shown in FIG. 14A;
[FIG. 15] FIG. 15A is a perspective view of a gripper according to the Third Embodiment; and FIG. 15B is a cross-sectional view of the gripper shown in FIG. 15A; and
[FIG. 16] FIG. 16A is an explanatory view of a frame body and a step of attaching the frame body to a pad, and FIG. 16B is an explanatory view of a clip and a step of attaching the clip to a gripper main body.

### DETAILED DESCRIPTION OF THE INVENTION

### First Embodiment

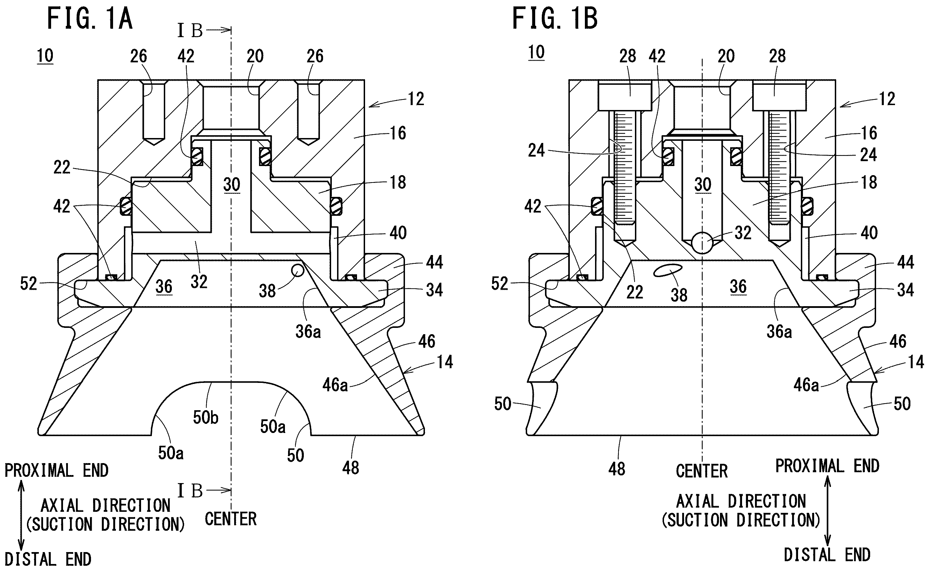

The gripper 10 according to the present embodiment shown in FIGS. 1A and 1B is a so-called vortex gripper, which grips a workpiece by generating a negative pressure by a jet flow (swirling flow) of compressed air (compressed fluid). The gripper 10 may be a Bernoulli gripper, which generates a negative pressure by radially jetting out compressed air. The gripper 10 is attached to the tip of a robot arm provided in an automated line or the like of a factory, and is used to grip and carry a workpiece.

As shown in FIGS. 1A and 1B, the gripper 10 includes a gripper main body 12 and a pad 14. The gripper main body 12 is a member that generates a negative pressure by generating a predetermined jet flow from the supplied compressed air. More specifically, the gripper main body 12 includes a casing 16 and a flow path member 18.

The casing 16 has a cylindrical shape and is located on the proximal end side of the flow path member 18. The casing 16 has an inlet 20, a housing recess 22, a first mounting hole 24 (FIG. 1B), and a second mounting hole 26 (FIG. 1A). The inlet 20 is located at a proximal center portion of the casing 16, and extends in the axial direction of the gripper main body 12. The inlet 20 is open on the proximal end side, and connected to a line through which the compressed air flows.

The housing recess 22 is a recessed portion located on the distal end side of the inlet 20 and communicates with the inlet 20. The housing recess 22 is a circular hollow with a diameter larger than that of the inlet 20, and is open on the distal end side of the casing 16. The first mounting hole 24 is a hole extending in the axial direction, one end of which is open to the proximal end of the casing 16 and the other end of which is open to the housing recess 22. The first mounting hole 24 accommodates a fastening member 28 (for example, a screw). The second mounting hole 26 is a screw hole, one end of which is open to the proximal end of the casing 16 and the other end of which is positioned inside the casing 16. The second mounting hole 26 is used for fastening the robot arm and the gripper 10.

The flow path member 18 is a substantially columnar member and internally includes a flow path. The flow path member 18 is housed in the housing recess 22 of the casing 16. As shown in FIG. 1B, the flow path member 18 is fixed to the casing 16 by fastening members 28. The flow path member 18 includes an axial flow path 30, a branch flow path 32, a flange 34, a nozzle recess 36, and a nozzle 38. The axial flow path 30 is positioned in a center portion of the flow path member 18 and extends in the axial direction. A proximal end portion of the axial flow path 30 communicates with the inlet 20, and a distal end portion of the axial flow path 30 communicates with the branch flow path 32. The branch flow path 32 extends in the radial direction of the flow path member 18, and penetrates in the radial direction through the flow path member 18. The branch flow path 32 communicates with an annular flow path 40 formed so as to surround the outer peripheral portion of the flow path member 18.

The annular flow path 40 is a flow path formed in the enlarged diameter portion of the housing recess 22. The inner circumferential surface of the enlarged diameter portion is separated from the outer circumferential surface of the flow path member 18, and the gap therebetween defines the annular flow path 40. The annular flow path 40 extends annularly so as to surround the outer peripheral portion of the flow path member 18. The nozzle 38 communicates with the annular flow path 40 and the nozzle recess 36, takes in the compressed air from the annular flow path 40, and jets the compressed air toward the nozzle recess 36. The nozzle 38 opens in the circumferential direction of the nozzle recess 36 and generates an air flow (swirl flow) swirling along an inner peripheral surface 36a of the nozzle recess 36.

The nozzle recess 36 has an inner diameter gradually increasing from the proximal end side toward the distal end side. The nozzle recess 36 has the inner peripheral surface 36a inclined at a predetermined angle with respect to the axial direction. The nozzle 38 has its opening in the inner peripheral surface 36a of the recess. The flange 34 is positioned at the distal end of the flow path member 18 and is in a disk shape extending outward in the radial direction. The flange 34 has an outer diameter larger than the outer diameter of the casing 16, and protrudes radially outward from the casing 16.

The gripper main body 12 has a plurality of packings 42 at predetermined positions at which the casing 16 and the flow path member 18 are in contact with each other. The packings 42 prevent leakage of the compressed air through gaps between the casing 16 and the flow path member 18.

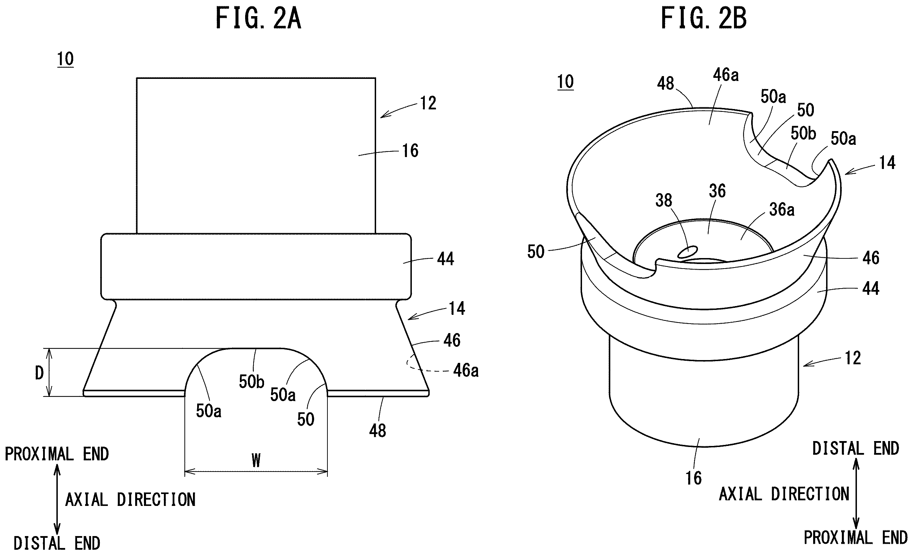

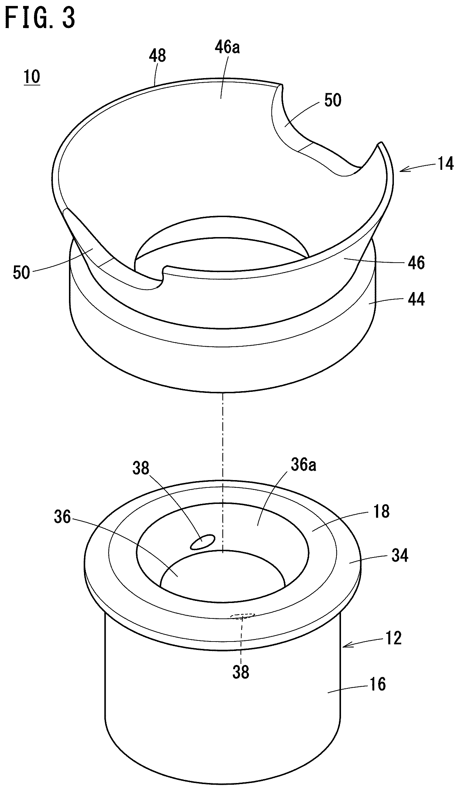

As shown in FIG. 3, the pad 14 is a tubular member and is detachably attached to the gripper main body 12. The pad 14 is made of a flexible material, and is integrally formed from, for example, elastically deformable rubber, elastomer, or elastically deformable resin. As shown in FIGS. 2A and 2B, the pad 14 has an engagement portion 44, a skirt 46, a gripper surface 48, and cutout portions 50.

The engaging portion 44 is a portion that engages with the flange 34 of the gripper main body 12. As shown in FIG. 1A, the engaging portion 44 has a groove 52 for accommodating the flange 34 in its inner periphery. The groove 52 for accommodating the flange 34 extends in the circumferential direction and accommodates the flange 34. The engaging portion 44 is attached so as to cover the outer periphery of the flange 34.

As shown in FIGS. 2A and 2B, the skirt 46 is located on the distal end side of the engaging portion 44. The skirt 46 is formed in a conical and tubular shape that widens in a tapering manner toward the distal end side. As shown in FIG. 1A, the skirt 46 has an inner peripheral surface 46a of the pad 14 on the inner peripheral side. The inner peripheral surface 46a of the pad 14 is inclined at a predetermined angle with respect to the axial direction, and is formed in a tapering manner such that the inner diameter gradually increases toward the distal end side. The inner peripheral surface 46a of the pad 14 is smoothly connected to the inner peripheral surface 36a of the recess 36 without a step.

The gripper surface 48 is an end face formed at the distal end of the pad 14 to face the workpiece. The gripper surface 48 is formed by a plane perpendicular to the axial direction of the gripper 10. As shown in FIGS. 2A and 2B, the cutout portions 50 are formed by partially cutting the pad 14 away at the distal end. The cutout portions 50 are formed by cutting the pad 14 away from the gripper surface 48 toward the proximal end side (suction direction) in the axial direction. The shape of the cutout portions 50 in a side view is a half of an oval cut in its minor axis. The cutout portions 50 each have a pair of arc portions 50a located on both sides in its widthwise direction and a long-side portion 50b located between the arc portions 50a.

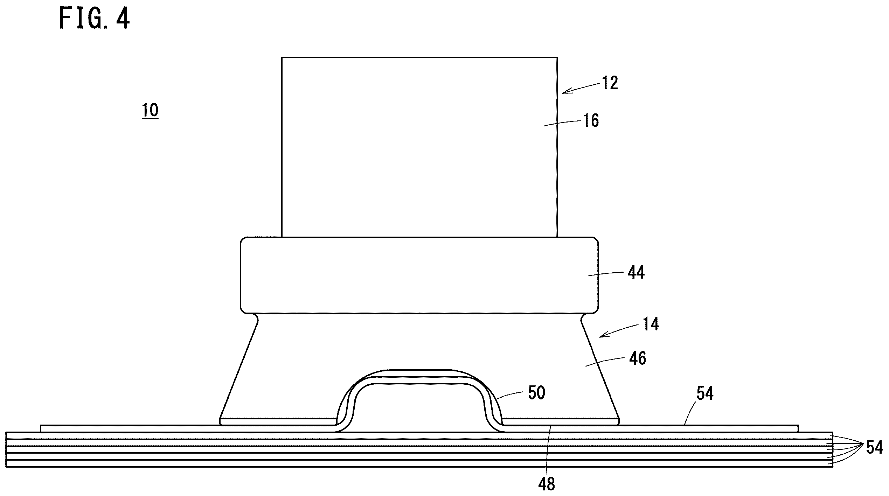

As shown in FIG. 2A, the cutout portion 50 is formed such that its width W (a size in the circumferential direction) is larger than its depth D (a size in the axial direction (suction direction)) in the side view. The width W of the cutout portion 50 is sufficiently large (for example, five times or more) with respect to the thickness of a flexible sheet-shaped workpiece 54 as illustrated in FIG. 4, for example. When the sheet-shaped workpiece 54 is sucked, such cutout portions 50 allow the sheet-shaped workpiece 54 to curve along and enter the cutout portions 50. As shown in FIG. 2B, the pad 14 in the present embodiment has two cutout portions 50 disposed 180 degrees apart from each other in the circumferential direction.

The gripper 10 of the present embodiment is configured as described above. Hereinafter, a description will be given concerning the operations of the gripper 10.

The gripper 10 is supplied with compressed air through an introduction opening. The compressed air reaches the nozzle 38 through the axial flow path 30, the branch flow path 32, and the annular flow path 40. The nozzle 38 generates a high-speed swirl flow by vigorously jetting the compressed air (compressed fluid) along the inner peripheral surface 36a of the recess 36 and the inner peripheral surface 46a of the pad 14. The air jetted from the nozzle 38 is discharged over the gripper surface 48 and through the cutout portion 50 of the pad 14. At this time, a negative pressure lower than the atmospheric pressure is generated at the center portion of the nozzle recess 36 and the pad 14 by the Bernoulli principle.

As shown in FIG. 4, the gripper 10 is used to grip a plurality of flexible sheet-shaped workpieces 54 stacked upon one another. The gripper 10 is arranged so that the gripper surface 48 faces the upper surface of the sheet-shaped workpieces 54 in a state where the air is jetted from the nozzle 38. As a result, the sheet-shaped workpiece 54 is sucked to the pad 14 by the negative pressure at the center portion of the pad 14. At this time, the sheet-shaped workpiece 54 is lifted by the negative pressure and enters the cutout portions 50. Such deformation occurs only in the uppermost sheet-shaped workpiece 54.

As the sheet-shaped workpiece 54 deforms along the shape of the cutout portions 50, the portion of the sheet-shaped workpiece 54 surrounding the gripper 10 is dragged in the inplane direction. In this manner, air enters between the uppermost sheet-shaped workpiece 54 and the sheet-shaped workpiece 54 of the second layer, and thus the sticking is alleviated. Thereafter, when the gripper 10 is pulled up, only the uppermost sheet-shaped workpiece 54 is peeled off from the plurality of sheet-shaped workpieces 54 stacked upon one another, and only the uppermost layer of the sheet-shaped workpiece 54 can be picked up. In this manner, the gripper 10 can grip the flexible sheet-shaped workpieces 54 one by one.

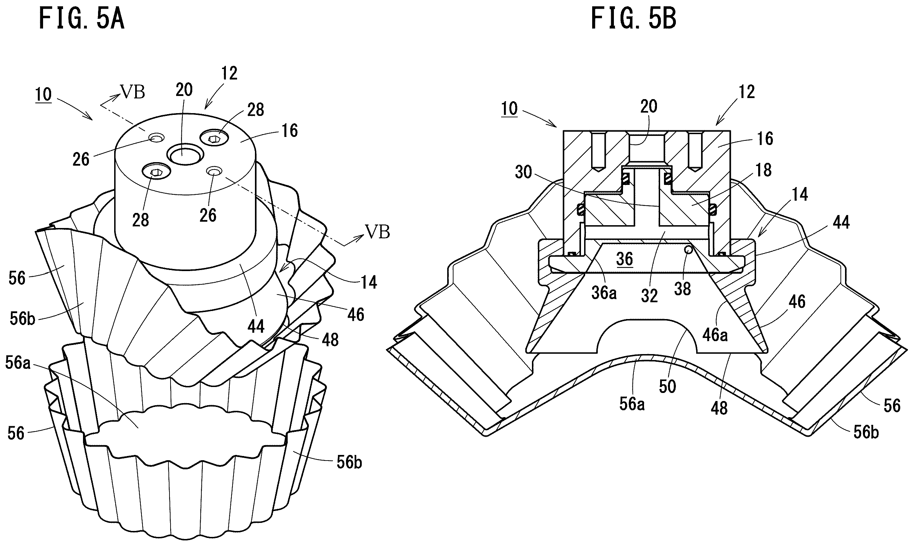

As shown in FIG. 5A, the gripper 10 is also suitable for gripping and carrying a glassine cup 56 (cup-shaped workpiece). The glassine cups 56 are formed by press-forming multiple pieces of glassine paper stacked upon one another, and multiple glassine cups 56 are joined together by burrs generated at the edge portions. Therefore, the glassine cup 56 is a workpiece that is difficult to pick up individually.

As shown in FIG. 5B, when the gripper 10 of the present embodiment is brought close to the bottom surface 56a of the glassine cup 56, the uppermost glassine cup 56 is sucked to the pad 14 by the negative pressure inside the pad 14. At this time, the bottom surface 56a of the glassine cup 56 is deformed so as to enter the cutout portions 50. The bottom surface 56a of the glassine cup 56 is deformed into a saddle shape by the pair of cutout portions 50. By the deformation of the bottom surface 56a, the side wall 56b of the glassine cup 56 is largely deformed as shown in the figure, the burrs at the edge portion of the uppermost glassine cup 56 is separated, and the uppermost glassine cup 56 that has been joined to the second or subsequent glassine cups 56 is released. As a result, the gripper 10 can grip the glassine cups 56 one by one.

In the cutout portions 50 of the gripper 10 of the present embodiment, the width W is greater than the depth D. Since the width W is large, the bottom surface 56a of the glassine cup 56 can be deformed so as to enter the cutout portions 50, so that the side wall 56b of the glassine cup 56 can be greatly deformed. Further, since the cutout portions 50 has the depth D smaller than the width W, the air flow can be discharged from the gripper 10 to the outside at a position closer to the workpiece. Such a gripper 10 suppresses a decrease in a suction force and generates a higher suction force.

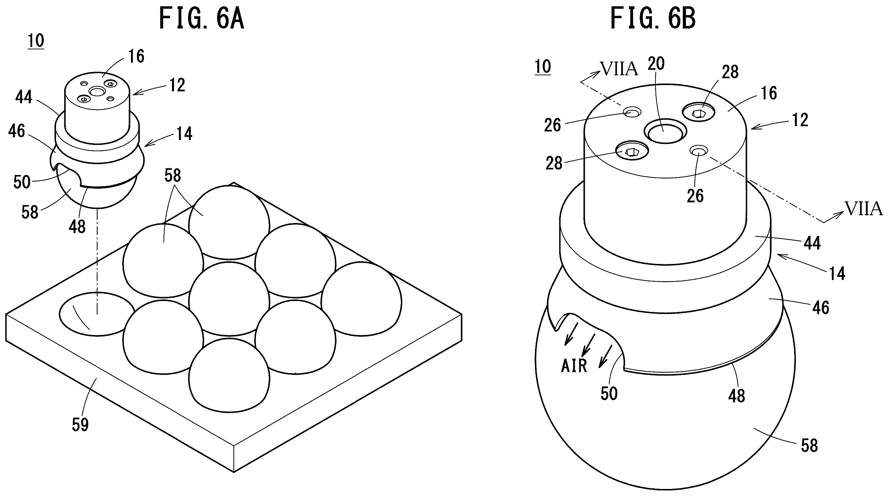

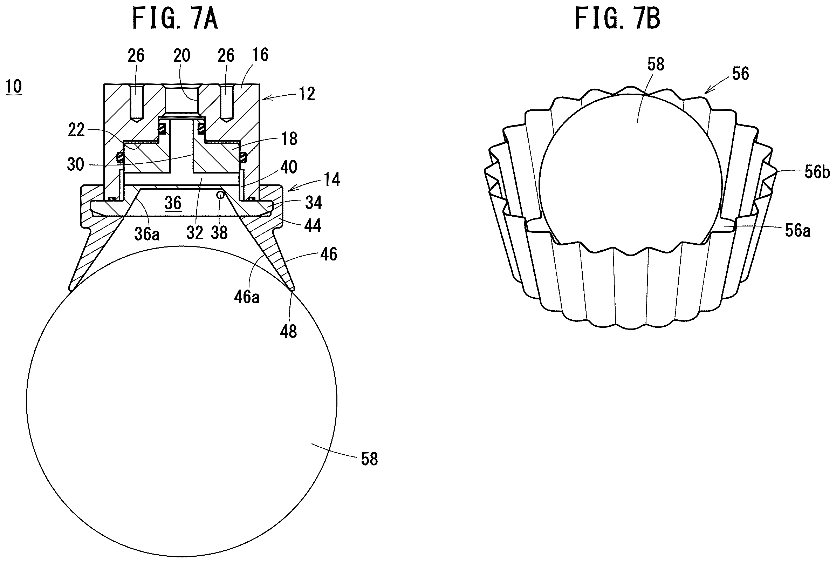

As shown in FIG. 6A, the gripper 10 can be suitably used for gripping a spherical workpiece 58. The spherical workpiece 58 shown in the figure is, for example, a chocolate confectionery placed on a tray 59. The gripper 10 holds the spherical workpiece 58 on the pad 14 by suction. As shown in FIG. 6B, a part of the air discharged from the nozzle 38 flows out from the gap between the spherical workpiece 58 and the pad 14 through the cutout portions 50. As shown in FIG. 7A, the pad 14 contacts the spherical workpiece 58 at portions other than the cutout portions 50, and prevents the spherical workpiece 58 from rotating.

When the pad 14 not having the cutout portion 50 (comparative example) is used, the air discharged from the nozzle 38 flows out from the entire circumference of the spherical workpiece 58 through the gap between the pad 14 and the spherical workpiece 58. In that case, the spherical workpiece 58 is kept out of contact with the pad 14, and the spherical workpiece 58 rotates. The pad 14 of the comparative example cannot be used for, for example, arranging decorated spherical workpieces 58 to be oriented in the same direction.

In contrast, in the case of the gripper 10 of the present embodiment, as shown in FIG. 6B, the jetted air is discharged from the cutout portions 50. Therefore, the spherical workpiece 58 and the pad 14 come into contact with each other at portions of the gripper surface 48 where the cutout portions 50 are not formed, and thus the spherical workpiece 58 can be prevented from rotating. Therefore, the gripper 10 can carry the spherical workpiece 58 without rotating the spherical workpieces 58.

As is clear from the above description, the gripper 10 can perform the arrangement of the glassine cups 56 and the arrangement of the spherical workpieces 58 on the glassine cups 56. Therefore, as shown in FIG. 7B, the gripper 10 can perform the arrangement of the glassine cups 56 and the arrangement of the spherical workpieces 58 in the glassine cups 56 without replacing the pad 14.

The gripper 10 of the present embodiment is not limited to the above-described configuration. Hereinafter, a description will be given concerning modifications of the pad 14 having the cutout portions 50.

### Modified Embodiment 1

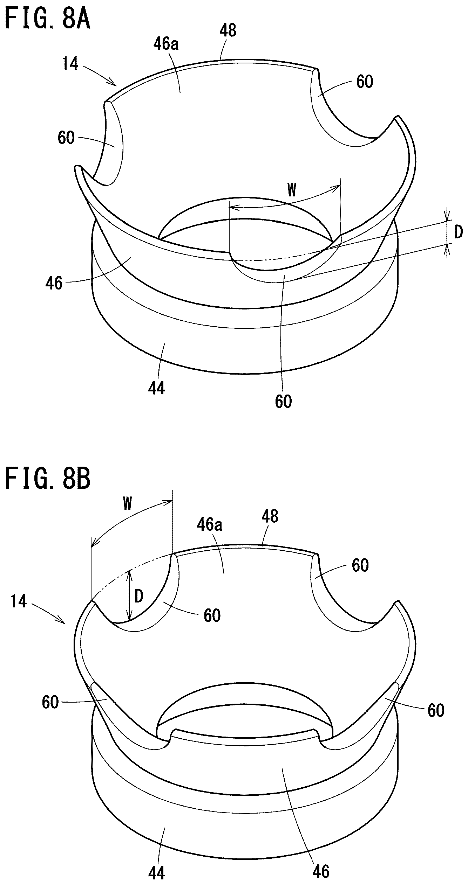

The pad 14 according to the present modification shown in FIG. 8A has three cutout portions 60 in the skirt 46. The three cutout portions 60 are arranged at equal intervals in the circumferential direction. In the pad 14 according to the present modification, the same constituent elements as those of the pad 14 shown in FIG. 1A are denoted by the same reference numerals, and detailed description of such features will be omitted.

Each cutout portion 60 is a portion cut in a semicircular shape in a side view, and is formed such that its width W that is larger than its depth D allows the sheet-shaped workpiece 54 or the glassine cup 56 to enter the cutout portion 60. The pad 14 of this modification functions in the same manner as the pad 14 in FIG. 1A, and deforms the uppermost sheet-shaped workpiece 54 or the uppermost glassine cup 56 and peels it off from the one in the second layer. Accordingly, the pad 14 of the present modification can grip and carry the sheet-shaped workpiece 54 or the glassine cup 56 one by one.

### Modified Embodiment 2

The pad 14 according to the present modification shown in FIG. 8B has four semicircular cutout portions 60 in the skirt 46. The four cutout portions 60 are arranged at equal intervals in the circumferential direction. In the pad 14 according to the present modification, the same constituent elements as those of the pad 14 shown in FIG. 1A are denoted by the same reference numerals, and detailed description of such features will be omitted.

The pad 14 of this modification functions in the same manner as the pad 14 shown in FIG. 1A, and can grip and carry the sheet-shaped workpieces 54 or the glassine cups 56 one by one.

### Modified Embodiment 3

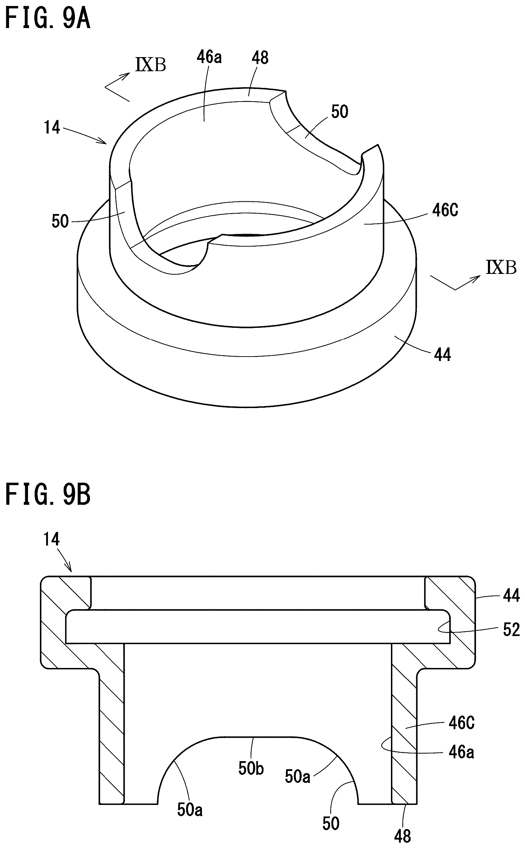

The pad 14 according to the present modification shown in FIGS. 9A and 9B has a cylindrical skirt 46C. In the pad 14 according to the present modification, the same constituent elements as those of the pad 14 shown in FIG. 1A are denoted by the same reference numerals, and detailed description of such features will be omitted.

In the pad 14 of the present modification, the swirling flow jetted from the nozzle 38 flows along the inner peripheral surface 46a of the pad 14 of the cylindrical skirt 46C, thereby generating a negative pressure. Although the suction force is slightly reduced as compared with the tapered skirt 46, the pad 14 of the present modification can also grip and carry the sheet-shaped workpieces 54 or the glassine cups 56 one by one.

The shape of the skirt 46C is not limited to a cylindrical shape, and may be a bellows shape.

### Modified Embodiment 4

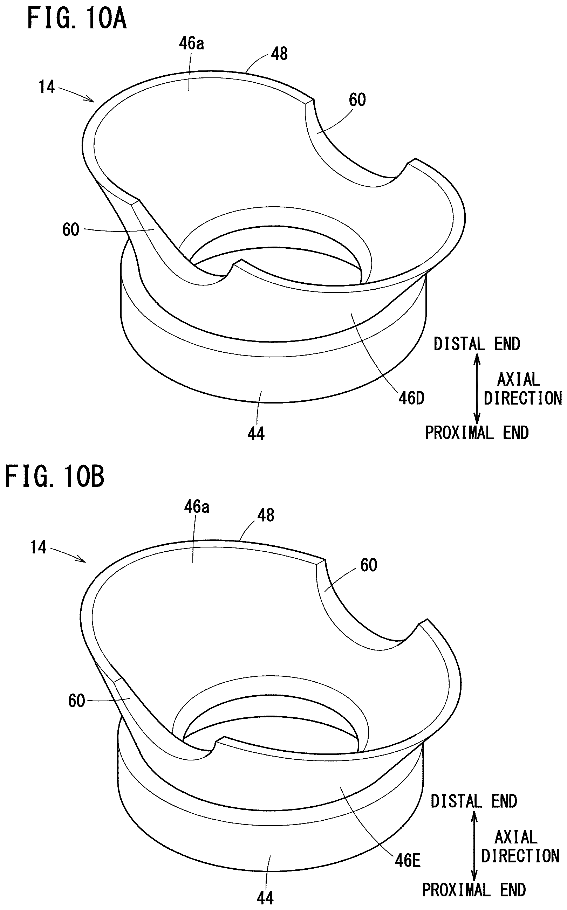

The pad 14 of the present modification shown in FIG. 10A has a skirt 46D that is oval in shape when viewed in the axial direction. The skirt 46D is formed in a tapered shape so that the inner diameter increases toward the distal end. The skirt 46D has two cutout portions 60, which are semicircular cutouts. The two cutout portions 60 are arranged along the minor axis. The rest of the configuration of the pad 14 of the present modification is the same as that of the pad 14 shown in FIG. 1A, and the detailed description thereof will be omitted.

The pad 14 of this modification functions in the same manner as the pad 14 shown in FIG. 1A, and can grip and carry the sheet-shaped workpieces 54 or the glassine cups 56 one by one.

### Modified Embodiment 5

The pad 14 of the present modification shown in FIG. 10B has a skirt 46E that is elliptically shaped when viewed in the axial direction. The skirt 46E is formed in a tapered shape so that the inner diameter increases toward the distal end. The skirt 46E has two semicircular cutout portions 60. The two cutout portions 60 are arranged along the minor axis. The rest of the configuration of the pad 14 of the present modification is the same as that of the pad 14 shown in FIG. 1A, and the detailed description thereof will be omitted.

The pad 14 of this modification functions in the same manner as the pad 14 shown in FIG. 1A, and can grip and carry the sheet-shaped workpieces 54 or the glassine cups 56 one by one.

### Modified Embodiment 6

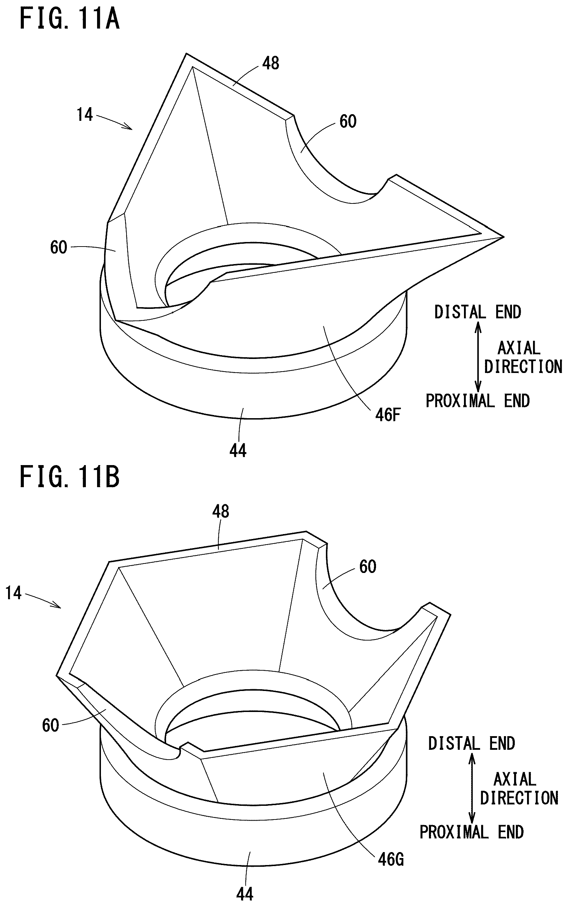

The pad 14 of the present modification shown in FIG. 11A has a skirt 46F that is triangularly shaped when viewed in the axial direction. The skirt 46F is formed in a tapered shape to expand (so that the inner diameter increases) toward the distal end. The skirt 46F has two semicircular cutout portions 60. The two cutout portions 60 are disposed 180 degrees apart from each other in the circumferential direction. The rest of the configuration of the pad 14 of the present modification is the same as that of the pad 14 shown in FIG. 1A, and the detailed description thereof will be omitted.

The pad 14 of this modification functions in the same manner as the pad 14 shown in FIG. 1A, and can grip and carry the sheet-shaped workpieces 54 or the glassine cups 56 one by one.

### Modified Embodiment 7

The pad 14 of the present modification shown in FIG. 11B has a skirt 46G that is multangular when viewed in the axial direction. The skirt 46G is formed in a tapered shape to expand (so that the inner diameter increases) toward the distal end. The skirt 46G has two semicircular cutout portions 60. The two cutout portions 60 are disposed 180 degrees apart from each other in the circumferential direction. The rest of the configuration of the pad 14 of the present modification is the same as that of the pad 14 shown in FIG. 1A, and the detailed description thereof will be omitted.

The pad 14 of this modification functions in the same manner as the pad 14 shown in FIG. 1A, and can grip and carry the sheet-shaped workpieces 54 or the glassine cups 56 one by one.

### Modified Embodiment 8

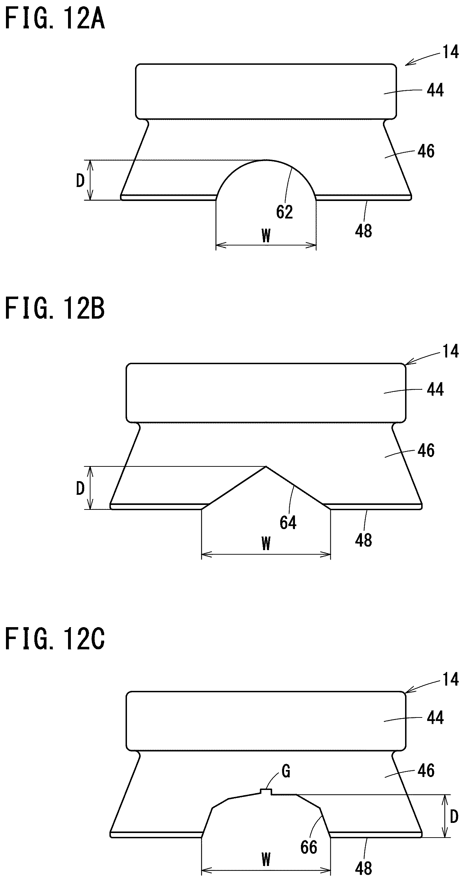

The pad 14 of the present modification shown in FIG. 12A has cutout portions 62 each having an arcuate shape in a side view. The arcuate cutout portions 62 have a greater radius of curvature than the semicircular cutout portions 60 (FIG. 8A), and are wider in width W than the cutout portions 60. The pad 14 of this modification functions in the same manner as the pad 14 shown in FIG. 1A, and can grip and carry the sheet-shaped workpieces 54 or the glassine cups 56 one by one.

### Modified Embodiment 9

The pad 14 of the present modification shown in FIG. 12B has cutout portions 64 each having a triangular shape in a side view. In the cutout portions 64, its width W is greater than its depth D.

The pad 14 of this modification functions in the same manner as the pad 14 shown in FIG. 1A, and can grip and carry the flexible sheet-shaped workpieces 54 or the glassine cups 56 one by one.

### Modified Embodiment 10

The pad 14 of the present modification shown in FIG. 12C has cutout portions 66 each having a multangular shape in a side view. In the cutout portions 66, the width W is greater than the depth D. The pad 14 of this modification functions in the same manner as the pad 14 shown in FIG. 1A, and can grip and carry the flexible sheet-shaped workpieces 54 or the glassine cups 56 one by one. Further, by forming another cutout portion G in the cutout portion 66, even when the sheet-shaped workpiece 54 is stuck to the cutout portion 66, the jetted air can be discharged from the other cutout portion G.

### Modified Embodiment 11

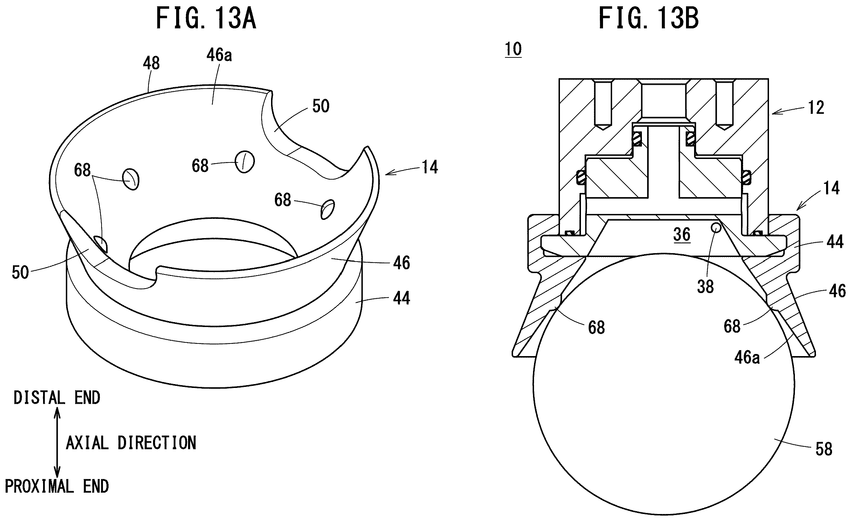

The pad 14 according to the present modification shown in FIGS. 13A and 13B has protrusions 68 protruding inward from the skirt 46. The protrusions 68 each protrude in a hemispherical shape. A plurality of such protrusions 68 are provided at predetermined intervals in the circumferential direction. The protrusions 68 are disposed at positions where the protrusions 68 can abut on the spherical workpiece 58. The rest of the configuration of the pad 14 of the present modification is the same as that of the pad 14 shown in FIG. 1A, and the description thereof will be omitted.

As shown in FIG. 13B, in picking the spherical workpiece 58 up, the protrusions 68 of the pad 14 of the present modification abut against the spherical workpiece 58. Accordingly, the pad 14 can suppress rotation and vibration of the spherical workpiece 58, and can grip and carry the spherical workpiece 58 in a stable state.

### Second Embodiment

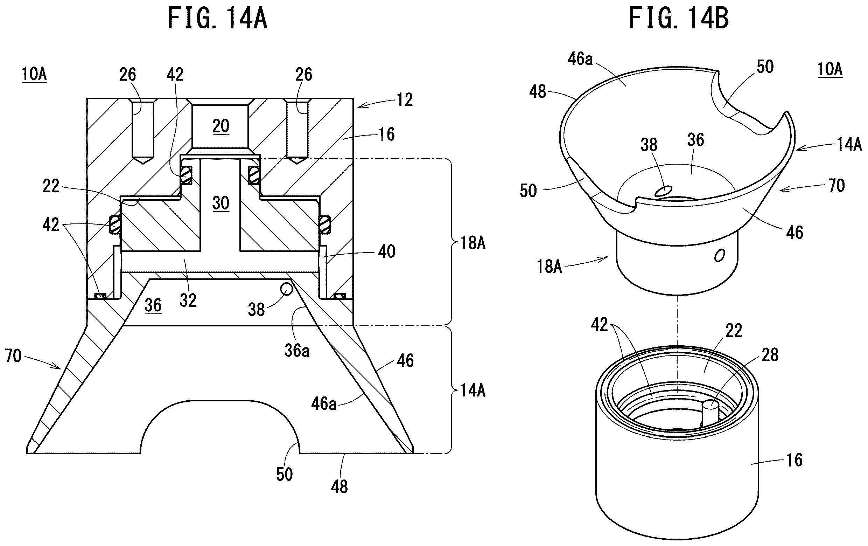

As shown in FIG. 14A, the gripper 10A according to the second embodiment includes a pad assembly 70 in which a pad 14A and a flow path member 18A are integrally connected. Moreover, in the gripper 10A, the same constituent elements as those of the gripper 10 shown in FIG. 1A are denoted by the same reference numerals, and detailed description of such features will be omitted.

The pad assembly 70 includes a flow path member 18A and a pad 14A. The flow path member 18A does not include the flange 34. The distal end portion of the flow path member 18A is integrally connected to the pad 14A. The rest of the configuration of the flow path member 18A is the same as that of the flow path member 18 shown in FIG. 1A. On the other hand, the pad 14A does not have the engaging portion 44, and the skirt 46 is integrally connected to the flow path member 18A. The inner peripheral surface 36a of the recess 36 and the inner peripheral surface 46a of the pad 14 are integrally connected to form one tapered surface. As shown in FIG. 14B, the pad assembly 70 is removably attachable to the casing 16 of the gripper 10A.

The gripper 10A of this embodiment functions in the same manner as the gripper 10 shown in FIG. 1A, and can grip and carry the flexible sheet-shaped workpieces 54 or the glassine cups 56 one by one. In addition, the gripper 10A has a further simplified structure due to the reduced number of parts compared to the gripper 10 in FIG. 1A.

### Third Embodiment

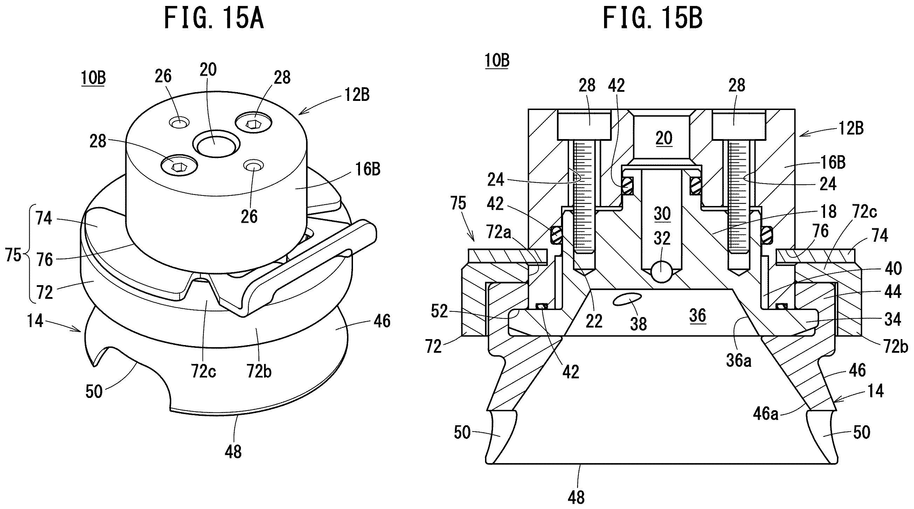

The gripper 10B of the present embodiment shown in FIGS. 15A and 15B further includes a retaining mechanism 75 including a frame member 72, a clip 74, and a clip mounting groove 76, in addition to the gripper main body 12B and the pad 14. In the gripper 10B, the same constituent elements as those of the gripper 10 shown in FIG. 1A are denoted by the same reference numerals, and detailed description of such features will be omitted.

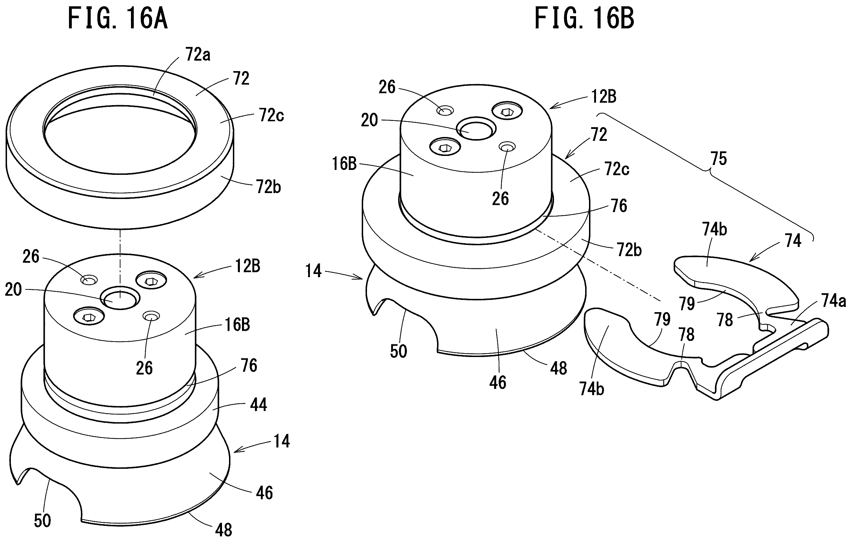

The gripper main body 12B includes a casing 16B and the flow path member 18. The casing 16B is configured generally similarly to the casing 16 shown in FIG. 1A, but is different from the casing 16 in that it includes the clip mounting groove 76 at a predetermined position on the outer peripheral surface as shown in FIG. 15B. As shown in FIG.16B, the clip mounting groove 76 is a groove extending over the entire circumference of the casing 16B in the circumferential direction, and its width (dimension in the axial direction) of the clip mounting groove 76 is slightly larger than the thickness of the clip 74. As shown in FIG. 15B, the clip mounting groove 76 accommodates the clip 74.

As shown in FIG. 16A, the frame member 72 is a round ringshaped member. The frame member 72 has an insertion hole 72a in the center portion thereof, into which the casing 16B can be inserted. As shown in FIG. 15B, the frame member 72 is formed to have an L-shape in cross section. The frame member 72 has a peripheral wall 72b covering the outer periphery of the engaging portion 44 of the pad 14 and a proximal end wall 72c abutting on the proximal end of the engaging portion 44. As shown in FIG. 16A, the frame member 72 is attached from the proximal end side of the engaging portion 44 of the pad 14, and covers the engaging portion 44. The frame member 72 is formed from a hard material that is not easily deformed, such as metal or resin. As shown in FIG. 15B, the peripheral wall 72b of the frame member 72 covers the outer periphery of the engaging portion 44. The peripheral wall 72b prevents the engaging portion 44 from being enlarged in diameter and from being disengaged from the flange 34. That is, the frame member 72 functions to prevent the pad 14 from falling off.

As shown in FIG. 15A, the clip 74 is mounted in a clip mounting groove 76 in the gripper main body 12B. As shown in FIG. 16B, the clip 74 is a plate-shaped member having a C-shape, and has an intermediate portion 74a and a pair of arc-shaped portions 74b. The intermediate portion 74a is located between the pair of arc-shaped portions 74b. Hinge portions 78 are formed at one end and the other end of the intermediate portion 74a, respectively. The hinge portions 78 are each formed to have a smaller radial length than the intermediate portion 74a and the arc-shaped portions 74b, and are easily elastically deformed. The pair of arc-shaped portions 74b can be elastically deformed about the hinge portions 78.

The arc-shaped portions 74b each have a plate-shaped portion formed in an arc shape with an inner peripheral side including an inner-diameter portion 79 that can be mounted in the clip mounting groove 76. The inner diameter of the inner diameter portion 79 is smaller than the diameter of the outer peripheral surface of the gripper main body 12B, and is formed to be substantially the same as the diameter of the clip mounting groove 76. The clip 74 is attached to the gripper main body 12B with a part of the inner diameter portion 79 accommodated in the clip mounting groove 76.

The gripper 10B is assembled in the manner shown in FIGS. 16A and 16B. First, a step of mounting the pad 14 on the gripper main body 12B is performed. This step is performed by fitting the flange 34 into the flange accommodating groove 52 (FIG. 15B) by elastically deforming the engaging portion 44 of the pad 14.

Next, as shown in FIG. 16A, a step of mounting the frame member 72 on the engaging portion 44 from the proximal end side is performed. Thereafter, as shown in FIG. 16B, a step of inserting the clip 74 into the clip mounting groove 76 of the gripper main body 12B is performed. The gripper 10B shown in FIG. 15A is completed through the above steps.

As shown in FIGS. 15A and 15B, the clip 74 of the gripper 10B abuts against the proximal end of the frame member 72 to prevent the frame member 72 from falling off. The frame member 72 covers the outer peripheral portion of the engaging portion 44 of the pad 14 to prevent the engaging portion 44 from falling off from the flange 34. Therefore, the gripper 10B of the present embodiment is brought into a state where the pad 14 is not detached unless the clip 74 is removed, and the pad 14 can be reliably prevented from falling off.

The following supplementary notes are further disclosed in relation to the above disclosure.

### Supplementary Note 1

One aspect is characterized by the gripper configured to suck a workpiece by a negative pressure, including the pad having a tubular shape and configured to pick the workpiece up, and the gripper main body to which the pad is attached, the gripper main body being configured to generate the negative pressure inside the pad by jetting a compressed fluid along an inner circumferential surface of the pad, wherein the pad includes the one or more cutout portions formed by cutting the pad at the gripper surface facing the workpiece.

The gripper has the cutout portions, and thus can deform the flexible sheet-shaped workpiece (uppermost layer) so as to enter the cutout portions. Accordingly, the gripper can grip only the uppermost workpiece, and can grip and carry the stacked flexible sheet-shaped workpieces one by one with a simple structure.

### Supplementary Note 2

In the gripper according to Supplementary Note 1, the cutout portions may have dimensions larger in the circumferential direction than in the suction direction. The gripper facilitates the entry of the sheet-shaped workpiece or the cup-shaped workpiece into the cutout portion, and can further increase the deformation amount.

### Supplementary Note 3

In the gripper according to Supplementary Note 1 or 2, the cutout portions may be provided as a pair at an interval of 180 degrees in the circumferential direction. When the gripper grips a soft sheet-shaped workpiece, the sheet-shaped workpiece is deformed to have a saddle shape between the two cutout portions. Thus, the gripper can easily separate the stacked sheet-shaped workpieces and grip the sheet-shaped workpieces one by one.

### Supplementary Note 4

In the gripper according to any one of Supplementary Notes 1 to 3, in a state where the workpiece is being sucked, at least a part of the compressed fluid may be discharged through the cutout portions. Since the gripper can secure the air discharge portions, it is possible to prevent the plate-shaped workpiece or the spherical workpiece from rotating while being gripped.

### Supplementary Note 5

In the gripper according to any one of Supplementary Note 1 to 4, the pad may include the protrusion that protrudes from the inner peripheral surface of the pad, at a position where the protrusion is to be brought into contact with the workpiece to make contact with the workpiece. When the gripper grips the spherical workpiece, the protrusion comes into contact with the spherical workpiece, thereby exerting a frictional force on the spherical workpiece and preventing the spherical workpiece from rotating.

### Supplementary Note 6

In the gripper according to any one of Supplementary Notes 1 to 5, the gripper main body may include the nozzle that opens in a direction to generate a swirling flow of the compressed fluid along an inner wall of the pad. This gripper can efficiently generate a negative pressure and can generate a high suction force. The gripper may be a so-called Bernoulli gripper having a nozzle for radially jetting a compressed fluid. Since the Bernoulli gripper does not generate a swirling force, the rotation of the workpiece can be prevented when the workpiece is being gripped.

### Supplementary Note 7

In the gripper according to any one of Supplementary Note 1 to 6, three or more of the cutout portions may be provided at equal intervals in the circumferential direction. The gripper can deform the uppermost sheet-shaped workpiece to peel off the uppermost sheet-shaped workpiece from the second and subsequent layers of the sheet-shaped workpieces, and can grip and carry the sheet-shaped workpieces one by one.

### Supplementary Note 8

In the gripper according to any one of Supplementary Notes 1 to 7, the pad may be tapered in a manner so that an inner diameter increases toward the gripper surface. The gripper can generate a higher suction force.

### Supplementary Note 9

In the gripper according to any one of Supplementary Notes 1 to 8, the pad may have a round shape, an elliptical shape, an oval shape, a triangular shape, or a polygonal shape, when viewed in an axial direction. This gripper can also grip and carry the sheet-shaped workpieces one by one.

### Supplementary Note 10

In the gripper according to any one of Supplementary Notes 1 to 9, the cutout portions may each have a round shape, an oval shape, a triangular shape, or a polygonal shape, in a side view. This gripper can also grip and carry the sheet-shaped workpieces one by one.

### Supplementary Note 11

In the gripper according to any one of Supplementary Notes 1 to 10, the pad may be formed from a flexible material. The gripper can easily attach and detach the pad.

### Supplementary Note 12

In the gripper according to any one of Supplementary Notes 1 to 11, the pad may be attachable to and detachable from the gripper main body. This gripper can easily keep cleanness of the pad that is to be in contact with the workpiece.

### Supplementary Note 13

The gripper according to any one of Supplementary Notes 1 to 12 may further include the retaining mechanism configured to prevent the pad from being detached from the gripper main body. The gripper can prevent a foreign object from entering the product by suppressing the pad from falling off.

### Supplementary Note 14

In the gripper according to any one of Supplementary Notes 1 to 13, the pad may be formed integrally with the gripper main body. This gripper can reduce the number of parts.

It should be noted that the present invention is not limited to the embodiment described above, and various alternative or additional configurations could be adopted therein without departing from the essence and gist of the present invention as set forth in the appended claims.

## Claims

1. A gripper (10, 10A, 10B) configured to suck a workpiece (54, 56, 58) by a negative pressure, comprising:
a pad (14, 14A) having a tubular shape and configured to pick the workpiece up; and
a gripper main body (12, 12B) to which the pad is attached, the gripper main body being configured to generate the negative pressure inside the pad by jetting a compressed fluid along an inner peripheral surface (46a) of the pad,
wherein the pad includes one or more cutout portions (50, 60, 62, 64, 66) formed by cutting the pad at a gripper surface (48) facing the workpiece.

2. The gripper according to claim 1, wherein the cutout portions have dimensions larger in a circumferential direction than in a suction direction.

3. The gripper according to claim 1, wherein the cutout portions are provided as a pair at an interval of 180 degrees in a circumferential direction.

4. The gripper according to claim 1, wherein in a state where the workpiece is being sucked, at least a part of the compressed fluid is discharged through the cutout portions.

5. The gripper according to claim 1, wherein the pad includes a protrusion (68) that protrudes from the inner peripheral surface of the pad, at a position where the protrusion is to be brought into contact with the workpiece to make contact with the workpiece.

6. The gripper according to claim 1, wherein the gripper main body includes a nozzle (38) that opens in a direction to generate a swirling flow of the compressed fluid along an inner wall of the pad.

7. The gripper according to claim 1, wherein three or more of the cutout portions are provided at equal intervals in a circumferential direction.

8. The gripper according to claim 1, wherein the pad is tapered in a manner so that an inner diameter increases toward the gripper surface.

9. The gripper according to claim 1, wherein the pad comprises a round shape, an elliptical shape, an oval shape, a triangular shape, or a polygonal shape, when viewed in an axial direction.

10. The gripper according to any one of claims 1 to 9, wherein the cutout portions each comprise a round shape, an oval shape, a triangular shape, or a polygonal shape, in a side view.

11. The gripper according to any one of claims 1 to 9, wherein the pad is formed from a flexible material.

12. The gripper according to any one of claims 1 to 9, wherein the pad is attachable to and detachable from the gripper main body.

13. The gripper according to any one of claims 1 to 9, further comprising: a retaining mechanism (75) configured to prevent the pad from being detached from the gripper main body.

14. The gripper according to any one of claims 1 to 9, wherein the pad is formed integrally with the gripper main body.
